# DEMANDE DE BREVET EUROPEEN

(11) **EP 1 193 995 A1**
(43) Date de publication de la demande: **03.04.2002**
(21) Numéro de dépôt: 01402183.6
(22) Date de dépôt: 16.08.2001
(51) Int. Cl.: H04Q 11/00

(54) **Commutateur pour réseau de transmission optique utilisant le multiplexage en longueur d'onde**

(30) Priorité: 02.10.2000 FR 0012510
(71) Demandeur: ALCATEL, 75008 Paris (FR)
(72) Inventeur: Noirie, Ludovic, 92220 Bagneux (FR); Dotaro, Emmanuel, 91370 Verrieres le Buisson (FR); Blaizot, Caroline, 78180 Montigny le Bretonneux (FR)
(74) Mandataire: Fournier, Michel

(57) **Abrégé**

Le commutateur comprend p1 ports d'entrée (I P) recevant p1 longueurs d'onde et des premiers moyens d'aiguillage pour aiguiller les p1 longueurs d'onde vers p2 ports de sortie (O P), q1 ports d'entrée (IBP) recevant q1 bandes de longueurs d'onde et des seconds moyens d'aiguillage pour aiguiller les q1 bandes vers q2 ports de sortie (OBP), r1 ports d'entrée (IFP) recevant r1 groupements de bandes et des troisièmes moyens d'aiguillage pour aiguiller les r1 groupements de bandes vers r2 ports de sortie (OFP).

Les trois moyens d'aiguillage sont constitués d'une matrice de commutation unique (MXC) apte à coupler l'un quelconque des p1+q1+r1 ports d'entrée à l'un quelconque des p2+q2+r2 ports de sortie.

Cette architecture à matrice unique permet de commuter toutes les granularités à la fois ce qui facilite les reconfigurations en fonction de l'évolution du trafic devant être commuté.

## Description

La présente invention se rapporte à un commutateur destiné à être mis en oeuvre dans un réseau de communication optique utilisant le multiplexage en longueurs d'onde.

La présente invention se situe dans le domaine des commutateurs optiques, ou noeuds de commutation optique, présentant une architecture dite à "multi-granularité". La "granularité" est une notion qui se rapporte à des ensembles prédéfinis de ressources de transmission (typiquement les longueurs d'onde porteuses ou les multiplex de longueurs d'onde), les ressources d'un tel ensemble pouvant être considérées comme un tout pour certains traitements communs (typiquement la commutation). Une architecture à "multi-granularité" prend donc en compte différents niveaux de granularité pour commuter le trafic total au niveau d'un commutateur. Par exemple, une partie du trafic total peut être commutée au niveau dit "fibre", c'est-à-dire regroupant la totalité des longueurs d'onde susceptibles d'être véhiculées par une fibre optique, qui correspond donc au niveau de granularité le plus élevé. Une autre partie peut être commutée au niveau bande de longueurs d'onde, qui correspond à un niveau de granularité intermédiaire. Une dernière partie peut être commutée au niveau longueur d'onde, qui correspond au niveau de granularité le plus faible. Des niveaux intermédiaires de granularité peuvent encore être définis.

La mise en oeuvre d'une architecture à multi-granularité permet de limiter l'accroissement de la complexité des commutateurs dans les réseaux optiques.

En effet, les télécommunications connaissent actuellement un essor très important se traduisant par des besoins accrus en transmission de données. La transmission par fibre optique est particulièrement impliquée par ce phénomène et la quantité de données transmises par les réseaux optiques est en constante augmentation. Cela se traduit par une augmentation du nombre de fibres installées dans les réseaux ainsi que du nombre de longueurs d'onde porteuses utilisées.

Une fibre optique est désormais capable de transmettre jusqu'à 256 longueurs d'onde, chaque longueur d'onde pouvant assurer un débit de données de 10 gigabits (1 Gbit = 10⁹ bits) par seconde. Ainsi, suivant le nombre de fibres qui arrivent à l'entrée du commutateur optique, le débit total à commuter peut être supérieur à plusieurs dizaines de terabits (1 Tbit = 10¹² bits) par seconde.

Un commutateur optique qui présente une architecture à multi-granularité permet de traiter de tels débits de données en commutant en partie des longueurs d'onde et en partie des bandes de longueurs d'onde, c'est-à-dire respectivement des canaux mono-longueur d'onde et des multiplex de longueurs d'onde. Le commutateur peut en outre traiter des groupements de bandes. Selon encore une autre possibilité, il pourrait aussi ne traiter que des bandes de longueurs d'onde et des groupements de bandes. Pour simplifier l'exposé et à titre d'exemple seulement nous considérerons dans la suite le cas à trois niveaux de granularité : longueur d'onde, bande et "fibre", ce dernier niveau correspondant à un cas particulier de groupement de bandes regroupant la totalité des longueurs d'onde susceptibles d'être véhiculées par une fibre optique.

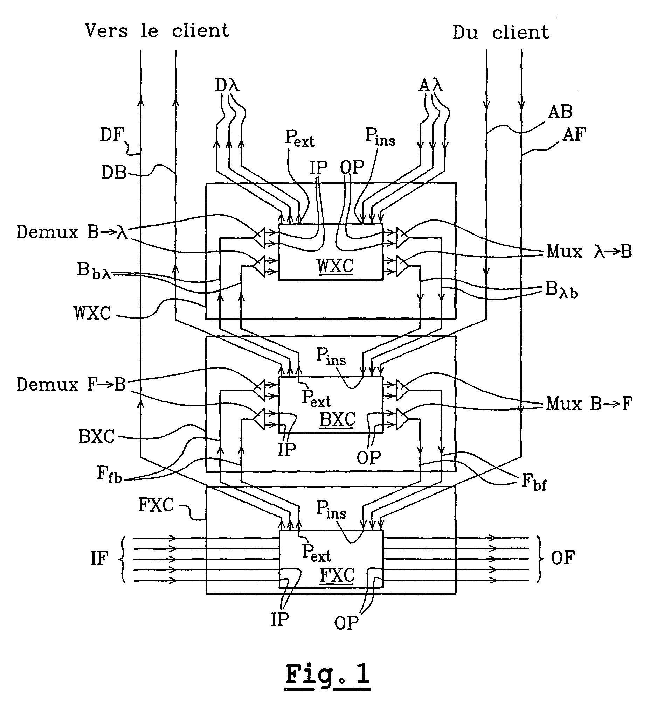

La figure 1 présente un schéma d'un noeud de commutation optique avec une architecture à multi-granularité, selon l'art antérieur.

Avec l'architecture à multi-granularité, on est passé de noeuds de commutation monoblocs à des noeuds de commutation constitués d'un empilement de sous-noeuds. Chaque sous-noeud de commutation est affecté à un niveau correspondant de granularité. Ainsi, on a dans l'exemple représenté un sous-noeud de commutation FXC associé au niveau de granularité "fibre" (qui est un cas particulier de groupement de bandes), un sous-noeud de commutation BXC associé au niveau de granularité "bande", et un sous-noeud de commutation WXC associé au niveau de granularité "longueur d'onde".

Sur la figure 1, les fibres entrantes IF sont d'abord envoyées sur les ports d'entrée IP du sous-noeud de commutation FXC. Parmi les fibres entrantes IF, quelques fibres sont directement commutées vers les fibres de sortie OF à travers les ports de sortie OP du sous-noeud de commutation FXC. Une fibre AF est directement insérée du client sur un port d'insertion de fibre Pᵢₙₛ du sous-noeud de commutation FXC. Une fibre DF est extraite à partir d'un port d'extraction de fibre Pₑₓₜ du sous-noeud FXC et est envoyée vers le client. La fibre DF doit être démultiplexée en longueurs d'onde pour le client, mais les démultiplexeurs ne sont pas représentés sur la figure. Des fibres F_{bf} sont insérées à partir du sous-noeud de commutation BXC sur des ports d'insertion de fibre Pᵢₙₛ du sous-noeud FXC. Ces fibres F_{bf} proviennent du multiplexeur bande - fibre Mux B F qui assure le multiplexage des bandes issues des ports de sortie OP du sous-noeud de commutation BXC. Enfin, des fibres F_{fb} sont extraites du sous-noeud FXC à travers des ports d'extraction et sont envoyées vers les ports d'entrée IP du sous-noeud BXC après démultiplexage des fibres en bandes dans le démultiplexeur fibre - bande Demux F B.

Le même processus de commutation se retrouve au niveau de granularité immédiatement inférieur, c'est-à-dire dans le sous-noeud de commutation au niveau de granularité bande BXC, ainsi qu'au niveau de granularité le plus faible, c'est-à-dire dans le sous-noeud de commutation au niveau de granularité longueur d'onde WXC.

Parmi les bandes qui arrivent sur les ports d'entrée IP du sous-noeud BXC, quelques-unes sont commutées vers les ports de sortie OP du sous-noeud BXC. Une bande AB est directement insérée du client sur un port d'insertion du sous-noeud BXC. Une bande DB est extraite à travers un port d'extraction Pₑₓₜ du sous-noeud FXC et est envoyée vers le client. La bande DB doit être démultiplexée en longueurs d'onde pour le client, mais les démultiplexeurs ne sont pas représentés sur la figure. Des bandes B _{b} sont insérées à partir du sous-noeud de commutation WXC sur des ports d'insertion Pᵢₙₛ du sous-noeud BXC. Ces bandes B_{b} proviennent du multiplexeur Mux B, qui assure le multiplexage en bande des longueurs d'onde issues des ports de sortie OP du sous-noeud de commutation BXC. Enfin, des bandes B_{b} sont extraites du sous-noeud BXC à travers des ports d'extraction et sont envoyées vers les ports d'entrée IP du sous-noeud WXC après démultiplexage des bandes en longueurs d'onde dans le démultiplexeur bande - longueur d'onde demux B.

Le même processus de commutation se retrouve encore une fois dans le sous-noeud WXC. Parmi les longueurs d'onde qui arrivent sur les ports d'entrée IP du sous-noeud WXC, quelques-unes sont commutées vers les ports de sortie OP du sous-noeud WXC. Des longueurs d'onde A sont directement insérées du client sur des ports d'insertion Pᵢₙₛ du sous-noeud WXC. Des longueurs d'onde D sont extraites à travers des ports d'extraction du sous-noeud WXC et sont envoyées vers le client.

Cette architecture selon l'art antérieur, telle qu'elle vient d'être décrite en liaison avec la figure 1, met en oeuvre des matrices de commutation (typiquement à base de commutateurs optiques "cross-bar") séparées pour chaque niveau de granularité. Le niveau de granularité fibre est traité dans la matrice de commutation FXC, le niveau de granularité bande est traité dans la matrice de commutation BXC et le niveau de granularité longueur d'onde est traité dans la matrice de commutation WXC. On a donc une matrice de commutation spécifique par granularité. Pour des nombres donnés de ports d'entrée affectés respectivement aux trois niveaux de granularité, cette solution est celle qui permet de limiter au mieux la complexité et la taille de l'ensemble.

Cependant, le nombre de ports d'entrée/sortie de chacune des matrices de commutation allouée à chaque niveau de granularité étant figé, ceci devient un inconvénient si on envisage de faire évoluer cette architecture pour l'adapter aux changements du trafic au cours du temps.

Prenons un exemple concret pour une telle architecture avec 10 Gbit/s de débit par longueur d'onde, 16 longueurs d'onde par bande et 10 bandes par fibre. Il peut être nécessaire de commuter :
- dans une étape initiale : 500 longueurs d'onde, aucune bande, aucune fibre, ce qui représente un débit total de 5 Tbit/s;
- dans un seconde étape : 250 longueurs d'onde, 250 bandes, aucune fibre, ce qui représente un débit total de 42,5 Tbit/s;
- dans une troisième étape : 100 longueurs d'onde, 400 bandes, aucune fibre, ce qui représente un débit total de 65 Tbit/s;
- dans une quatrième étape : 100 longueurs d'onde, 300 bandes, 100 fibres, ce qui représente un débit total de 209 Tbit/s;
- dans une cinquième étape : aucune longueur d'onde, 200 bandes, 300 fibres, ce qui représente un débit total de 512 Tbit/s;

Au cours de la première étape, il faut prévoir une matrice de commutation WXC 500*500 (ce qui signifie un nombre d'états de la matrice égal à 500*500) pour la granularité longueur d'onde. Cependant, cette matrice de commutation WXC ne sera pas complètement utilisée dans les étapes suivantes.

Dans la troisième étape, il est nécessaire de prévoir une matrice de commutation BXC 400*400 pour la granularité bande. Mais, au cours de la cinquième étape, la moitié seulement des ports d'entrée/sortie de cette matrice seront utilisés.

Enfin, dans la cinquième étape, une matrice de commutation FXC 300*300 pour la granularité fibre est nécessaire. Là encore, cette matrice de commutation est sous-utilisée dans les autres étapes.

Ainsi, selon l'exemple d'évolution précédent, avec l'architecture de l'art antérieur, le nombre total de ports d'entrée à prévoir dans le commutateur optique est égal à 1200, et ne sera que partiellement utilisé.

Aussi, le but de la présente invention est de mettre en oeuvre une architecture permettant de commuter différents niveaux de granularité, tout en évitant les inconvénients de l'art antérieur, c'est-à-dire en prévoyant une architecture qui soit optimale non pas à une étape donnée de l'évolution du trafic à commuter mais pour un ensemble de configurations adaptées tout au long de cette évolution.

A cet effet, l'invention propose d'utiliser une seule et même matrice de commutation pour commuter tous les niveaux de granularité à la fois. Les trois matrices de commutation séparées selon l'art antérieur, correspondant respectivement à un niveau de granularité fibre, bande et longueur d'onde, sont remplacées par une matrice de commutation unique qui traite toutes les granularités. Selon les besoins, c'est-à-dire selon le trafic à commuter, des nombres adaptés de ports de la matrice unique seront affectés respectivement à un niveau de granularité faible (les longueurs d'onde), à un niveau de granularité intermédiaire (les bandes de longueurs d'onde), enfin à un niveau de granularité élevé (les fibres).

L'invention concerne donc un commutateur optique pour réseau optique utilisant le multiplexage en longueur d'onde, comprenant :
- p1 ports d'entrée recevant respectivement p1 longueurs d'onde, p2 ports de sortie, et des premiers moyens d'aiguillage aptes à aiguiller les longueurs d'onde reçues sur lesdits p1 ports d'entrée sélectivement vers lesdits p2 ports de sortie, et/ou
- q1 ports d'entrée recevant respectivement q1 bandes de longueurs d'onde, q2 ports de sortie, et des seconds moyens d'aiguillage aptes à aiguiller les bandes de longueurs d'onde reçues sur lesdits q1 ports d'entrée sélectivement vers lesdits q2 ports de sortie, et/ou
- r1 ports d'entrée recevant respectivement r1 groupements de bandes, r2 ports de sortie, et des troisièmes moyens d'aiguillage aptes à aiguiller les groupements de bandes reçus sur lesdits r1 ports d'entrée sélectivement vers lesdits r2 ports de sortie,
ledit commutateur comportant au moins deux desdits premiers, seconds et troisièmes moyens d'aiguillage,
caractérisé en ce que lesdits premiers, seconds et troisièmes moyens d'aiguillage sont constitués d'une matrice de commutation unique apte à coupler l'un quelconque desdits p1+q1+r1 ports d'entrée à l'un quelconque desdits p2+q2+r2 ports de sortie.

D'autres caractéristiques et avantages de l'invention apparaîtront plus clairement à la lecture de la description suivante d'un exemple particulier de réalisation en référence aux figures dans lesquelles :
- la figure 1 est un schéma d'un commutateur optique mettant en oeuvre une architecture à multi-granularité selon l'art antérieur, telle que décrite dans le préambule ci-dessus;
- la figure 2 est un schéma d'un commutateur optique selon la présente invention.

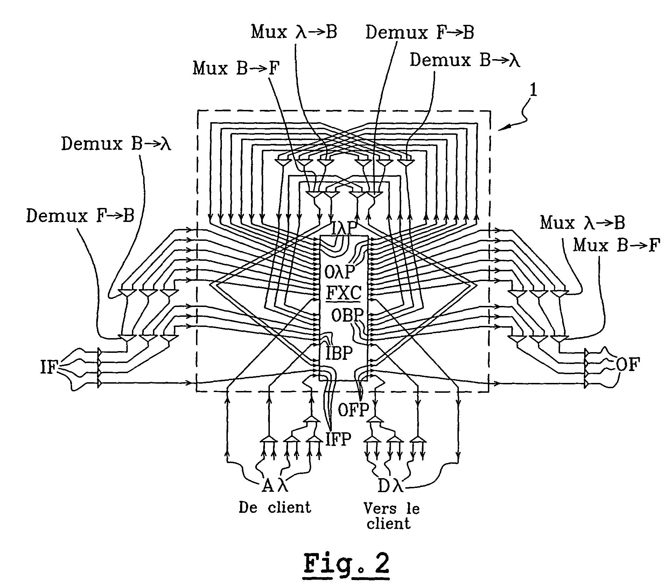

Dans le mode de réalisation préféré de l'invention décrit ci-dessous en référence à la figure 2, le nombre de niveaux de granularité est égal à trois : la longueur d'onde, la bande de longueurs d'onde et la fibre. L'invention peut néanmoins être mise en oeuvre avec un nombre de niveaux de granularité égal à deux ou supérieur à trois.

Des fibres entrantes IF sont reçues en entrée du commutateur 1 qui délivre en sortie des fibres sortantes OF. Une série de longueurs d'onde A est également ajoutée de chez le client vers le commutateur 1, tandis qu'une série de longueurs d'onde D est extraite du commutateur 1 vers le client.

Le commutateur 1 met en oeuvre une matrice de commutation à multi-granularité unique MXC qui comprend une première série de ports d'entrée I P, d'un nombre égal à p1, affectés au niveau de granularité longueur d'onde pour recevoir respectivement p1 longueurs d'onde, une deuxième série de ports d'entrée IBP, d'un nombre égal à q1, affectés au niveau de granularité bande de longueurs d'onde pour recevoir respectivement q1 bandes de longueurs d'onde et une troisième série de ports d'entrée IFP, d'un nombre égal à r1, affectés au niveau de granularité fibre pour recevoir respectivement r1 fibres.

La matrice unique MXC comprend également, en correspondance avec les ports d'entrée, une première série de ports de sortie O P, d'un nombre égal à p2, affectés au niveau de granularité longueur d'onde, une deuxième série de ports de sortie OBP, d'un nombre égal à q2, affectés au niveau de granularité bande de longueurs d'onde et une troisième série de ports de sortie OFP, d'un nombre égal à r2, affectés au niveau de granularité fibre.

A l'entrée du commutateur 1 dont le coeur est délimité par une ligne en pointillés à la figure 2, se trouve une interface d'entrée constituée d'un ensemble de démultiplexeurs fibre - bande Demux _{F-B} et de démultiplexeurs bande - longueur d'onde Demux _{B-λ}. A la sortie du commutateur 1, se trouve une interface de sortie constituée d'un ensemble de multiplexeurs longueur d'onde - bande MUX _{λ-B} et de multiplexeurs bande - fibre MUX _{B-F}. L'interface de sortie peut également comporter des convertisseurs de longueur d'onde, des convertisseurs de bande et/ou des régénérateurs, non représentés sur la figure 2. Néanmoins, leur présence est optionnelle.

Dans le coeur du commutateur 1 se trouve une zone de réarrangement interne constituée d'une part, d'un ensemble de démultiplexeurs fibre - bande Demux _{F-B} et de démultiplexeurs bande - longueur d'onde Demux _{B-λ}, du même type que ceux décrits précédemment et, d'autre part, d'un ensemble de multiplexeurs longueur d'onde - bande MUX _{λ-B} et de multiplexeurs bande - fibre MUX _{B-F}, également du même type que ceux décrits précédemment.

Parmi les fibres entrantes IF, certaines, après avoir d'abord été démultiplexées en bandes à travers les démultiplexeurs fibre - bande Demux _{F-B}, sont à nouveau démultiplexées en longueur d'onde à travers les démultiplexeurs bande - longueur d'onde Demux _{B-λ} puis sont envoyées sur les p1 ports d'entrée affectés aux longueurs d'onde IλP de la matrice unique MXC. Les longueurs d'onde sont alors commutées, par l'intermédiaire de premiers moyens d'aiguillage, vers les p2 ports de sortie affectés aux longueurs d'onde OλP de la matrice MXC. Les premiers moyens d'aiguillage sont constitués par la matrice de commutation unique MXC et permettent d'aiguiller les longueurs d'onde reçues sur les p1 ports d'entrée affectés aux longueurs d'onde sélectivement vers les p2 ports de sortie affectés aux longueurs d'onde.

D'autres fibres entrantes IF sont démultiplexées en bandes de longueurs d'onde à travers les démultiplexeurs fibre-bande Demux _{F-B} et sont envoyées vers les q1 ports d'entrée affectés aux bandes de longueurs d'onde IBP de la matrice MXC. Les bandes de longueur d'onde sont alors commutées, par l'intermédiaire de seconds moyens d'aiguillage, vers les q2 ports de sortie affectés aux bandes de longueur d'onde OBP de la matrice MXC. Les seconds moyens d'aiguillage sont constitués par la matrice de commutation unique MXC et permettent d'aiguiller les bandes de longueurs d'onde reçues sur les q1 ports d'entrée sélectivement vers les q2 ports de sortie.

Enfin, certaines fibres entrantes IF sont envoyées directement sur les r1 ports d'entrée affectés aux fibres IFP de la matrice MXC pour être commutées, par l'intermédiaire de troisième moyens d'aiguillage, vers les r2 ports de sortie affectés aux fibres OFP de la matrice MXC. Ces troisièmes moyens d'aiguillage sont constitués par la matrice de commutation unique MXC et permettent d'aiguiller les fibres reçues sur les r1 ports d'entrée sélectivement vers les r2 ports de sortie.

Au niveau des ports de sortie affectés à la granularité longueur d'onde O P, certaines longueurs d'onde sont dirigées vers l'interface de sortie et sont alors multiplexées en bandes puis en fibres par l'intermédiaire des multiplexeurs longueur d'onde - bande MUX _{λ-B} et bande - fibre MUX _{B-F}. D'autres longueurs d'onde peuvent être dirigées vers la zone de réarrangement interne. Ces longueurs d'onde peuvent alors être rebouclées sur la matrice de commutation MXC d'une part, au niveau des ports d'entrée affectés à la granularité bande IBP par l'intermédiaire des multiplexeurs longueur d'onde - bande MUX _{λ-B} situés dans la zone de réarrangement interne et, d'autre part, au niveau des ports d'entrée affectés à la granularité fibre IFP par l'intermédiaire des multiplexeurs longueur d'onde - bande MUX _{λ-B} et des multiplexeurs bande - fibre MUX _{B-F}.

Au niveau des ports de sortie affectés à la granularité bande OBP, certaines bandes sont dirigées directement vers l'interface de sortie et sont multiplexées en fibres par l'intermédiaire des multiplexeurs bande - fibre MUX _{B-F}. D'autres bandes peuvent être dirigées vers la zone de réarrangement interne. Ces bandes peuvent alors être rebouclées sur la matrice de commutation MXC d'une part, au niveau des ports d'entrée affectés à la granularité longueur d'onde I P par l'intermédiaire des démultiplexeurs bande - longueur d'onde Demux _{B-λ} situés dans la zone de réarrangement interne et, d'autre part, au niveau des ports d'entrée affectés à la granularité fibre IFP par l'intermédiaire des multiplexeurs bande - fibre MUX _{B-F}.

Au niveau des ports de sortie affectés à la granularité fibre OFP, certaines fibres sont dirigées directement vers l'interface de sortie. D'autres fibres peuvent être dirigées vers la zone de réarrangement interne. Ces fibres peuvent alors être rebouclées sur la matrice de commutation MXC d'une part, au niveau des ports d'entrée affectés à la granularité bande IBP par l'intermédiaire des démultiplexeurs fibre - bande Demux _{F-B} situés dans la zone de réarrangement interne et, d'autre part, au niveau des ports d'entrée affectés à la granularité longueur d'onde I P par l'intermédiaire des démultiplexeurs fibre - bande Demux _{F-B} et des démultiplexeurs bande - longueur d'onde Demux _{B-λ}.

Selon un avantage de l'invention, cette architecture à matrice unique permet de commuter toutes les granularités à la fois et permet d'être plus flexible en fonction de l'évolution du trafic devant être commuté dans le commutateur optique. La matrice de commutation unique mise en oeuvre dans le commutateur selon l'invention est prévue pour pouvoir coupler l'un quelconque des p1+q1+r1 ports d'entrée à l'un quelconque des p2+q2+r2 ports de sortie, même si pour une configuration donnée de multi-granularité tous les états possibles du commutateur ne sont généralement pas utilisés.

Ainsi, des ports d'entrée/sortie qui étaient affectés à des longueurs d'onde peuvent ultérieurement être affectés à des bandes de longueurs d'onde de façon à augmenter la capacité de la matrice en terme de débit. Cette augmentation de capacité est réalisée sans changer le commutateur spatial mais en intervenant au niveau des interfaces d'entrée et de sortie, ainsi qu'au niveau de la zone de réarrangement interne. C'est-à-dire en modifiant les connexions au niveau des démultiplexeurs et des multiplexeurs. Une telle matrice de commutation a donc la faculté de s'adapter à des débits de données de plus en plus importants en pouvant changer à volonté de capacité.

Cette matrice de commutation unique MXC met en oeuvre la même technologie que les matrices de commutation de niveau de granularité fibre utilisées dans les architectures selon l'art antérieur mettant en oeuvre une matrice de commutation séparée pour chaque granularité.

Selon un mode de réalisation particulier de l'invention, l'interface d'entrée et l'interface de sortie telles que décrites précédemment sont supprimées. Le démultiplexage à l'entrée du commutateur 1 et le multiplexage à la sortie sont donc supprimés et le commutateur 1 met uniquement en oeuvre la zone de réarrangement interne, constituée par l'ensemble des multiplexeurs et démultiplexeurs situés à l'intérieur de l'architecture. Dans ce mode de réalisation particulier, on entre uniquement au niveau de granularité fibre dans le commutateur 1. Les fibres sont alors dirigées vers la zone de réarrangement interne pour être démultiplexée au niveau de granularité bande, puis au niveau de granularité longueur d'onde.

## Revendications

1. Commutateur optique (1) pour réseau optique utilisant le multiplexage en longueur d'onde, comprenant :
- p1 ports d'entrée (I P) recevant respectivement p1 longueurs d'onde, p2 ports de sortie (O P), et des premiers moyens d'aiguillage aptes à aiguiller les longueurs d'onde reçues sur lesdits p1 ports d'entrée sélectivement vers lesdits p2 ports de sortie, et/ou
- q1 ports d'entrée (IBP) recevant respectivement q1 bandes de longueurs d'onde, q2 ports de sortie (OBP), et des seconds moyens d'aiguillage aptes à aiguiller les bandes de longueurs d'onde reçues sur lesdits q1 ports d'entrée sélectivement vers lesdits q2 ports de sortie, et/ou
- r1 ports d'entrée (IFP) recevant respectivement r1 groupements de bandes, r2 ports de sortie (OFP), et des troisièmes moyens d'aiguillage aptes à aiguiller les groupements de bandes reçus sur lesdits r1 ports d'entrée sélectivement vers lesdits r2 ports de sortie, ledit commutateur comportant au moins deux desdits premiers, seconds et troisièmes moyens d'aiguillage,
**caractérisé en ce que** lesdits premiers, seconds et troisièmes moyens d'aiguillage sont constitués d'une matrice de commutation unique (MXC) apte à coupler l'un quelconque desdits p1+q1+r1 ports d'entrée à l'un quelconque desdits p2+q2+r2 ports de sortie.

2. Commutateur selon la revendication 1, **caractérisé en ce qu'**il comprend une zone de réarrangement interne comportant d'une part un ensemble de démultiplexeurs groupements de bandes - bande (Demux _{F-B}) et/ou de démultiplexeurs bande - longueur d'onde (Demux _{B-λ}), et, d'autre part un ensemble de multiplexeurs longueur d'onde - bande (MUX _{λ-B}) et/ou de multiplexeurs bande - groupements de bandes (MUX _{B-F}).

3. Commutateur selon la revendication 2, **caractérisé en ce qu'**il comprend en plus une interface d'entrée constituée d'un ensemble de démultiplexeurs groupements de bandes - bande (Demux _{F-B}) et/ou de démultiplexeurs bande - longueur d'onde (Demux _{B-λ}) et une interface de sortie constituée d'un ensemble de multiplexeurs longueur d'onde - bande (Mux _{λ-B}) et/ou de multiplexeurs bande - groupements de bandes (Mux _{B-F}).

4. Commutateur selon la revendication 3, **caractérisé en ce que** l'interface de sortie comprend en plus des convertisseurs de longueurs d'onde et/ou des convertisseurs de bandes de longueurs d'onde et/ou des régénérateurs.
